# EUROPÄISCHE PATENTSCHRIFT

(11) **EP 3 798 042 B1**
(45) Veröffentlichungstag und Bekanntmachung des Hinweises auf die Patenterteilung: **17.07.2024**
(21) Anmeldenummer: 20197855.8
(22) Anmeldetag: 23.09.2020
(51) Int. Cl.: B60L 7/14, B60L 7/16, B60L 50/53, B61C 3/02

(54) **BATTERIEGESTÜTZTES SCHIENENFAHRZEUG**
BATTERY-SUPPORTED RAIL VEHICLE
VÉHICULE FERROVIAIRE ALIMENTÉ PAR BATTERIES

(30) Priorität: 26.09.2019 DE 102019125944
(43) Veröffentlichungstag der Anmeldung: 31.03.2021
(73) Patentinhaber: Bombardier Transportation GmbH, 10785 Berlin (DE)
(72) Erfinder: Buschbeck, Jan, 13509 Berlin (DE); Krischer, Hans, 14055 Berlin (DE)
(74) Vertreter: Zimmermann & Partner Patentanwälte mbB

(56) Entgegenhaltungen:
- EP-A1- 2 570 292
- DE-A1- 102016 202 136

## Beschreibung

### Technisches Gebiet

Die Erfindung betrifft ein Schienenfahrzeug, ein Verfahren zum Überbrücken einer Stromlücke beim Durchfahren einer Trennstelle mit einem Schienenfahrzeug und ein Verfahren zum energieeffizienten Antreiben eines Traktionsmotors eines Schienenfahrzeugs.

### Vorbekannter Stand der Technik

Während der Traktion eines Schienenfahrzeugs können Trennstellen auftreten. Beispielsweise treten bei 15 kV/16,7 Hz Netzen ab und zu Trennstellen auf, wenn Netze voneinander getrennt sind. Bei 25 kV/50 Hz Netzen sind diese Trennstellen um ein vielfaches häufiger, da abschnittsweise immer eine andere Phase des speisenden Landesnetzes belastet werden soll. Häufig fährt ein Schienenfahrzeug mit Zugkraft am Rad in eine Trennstelle ein. Beim Einfahren wird der Hauptschalter geöffnet. Ein mit dem Hauptschalter verbundener Zwischenkreis wird schlagartig (beispielsweise innerhalb von 20 bis 50 ms) nicht mehr versorgt, wodurch die Zwischenkreisspannung einbricht. Beim Passieren einer Trennstelle besteht aber ein Bedarf Hilfsbetriebe des Schienenfahrzeugs, beispielsweise Klimaanlagen, Beleuchtung usw., aufrechtzuerhalten.

Häufig sind Schienenfahrzeuge bzw. deren Traktionsmaschine dazu eingerichtet beim Passieren der Trennstelle in den generatorischen Stützbetrieb überzugehen. Im generatorischen Stützbetrieb kann der Zwischenkreis gestützt werden, sodass es zu keinem Stromausfall im Zwischenkreis, bzw. in den Hilfsbetrieben oder in den Hilfsbetriebenetzen, des Schienenfahrzeugs kommt.

Beim Einfahren in die Trennstelle kann es dazu kommen, dass kein Stromnetz oder Oberleitung vorhanden ist, jedoch Energie bereitgestellt werden müsste, um den Motor im Falle einer Drehstrom-Asynchronmaschine aufzumagnetisieren, um in den Stützbremsbetrieb zu gehen und/oder elektrodynamisch zu bremsen.

Aus der EP 0 691 236 A1 ist ein Verfahren zur Überbrückung von Lücken in der Stromversorgung von elektrischen Schienenfahrzeugen bekannt. Das Schienenfahrzeug weist einen Zwischenkreis auf, an dem ein Traktionswechselrichter angeschlossen ist, der zur Speisung eines Antriebsmotors dient. Sobald ein in Fahrtrichtung vorderer Stromabnehmer keinen Kontakt zur Stromversorgung hat, wird der Traktionswechselrichter vom Fahrbetrieb in den Stützbremsbetrieb, d.h. generatorischen Betriebszustand, oder vom Bremsbetrieb in den Stützbremsbetrieb umgesteuert. Fällt beim Stützbremsbetrieb ohne Speisung des Zugstromversorgungsnetzes die Geschwindigkeit des Zugverbandes unter einen kritischen unteren Wert ab, wird auf eine Betriebsart Blockiermodus umgeschaltet. Bei dieser Betriebsart wird zusätzlich zur Abschaltung des Zugstromversorgungsnetzes die gesamte Leistungsumformung gesperrt, so dass eine maximale Rollstrecke des Zugverbandes ohne Leistungseinspeisung erzielt wird. Weiterhin sind derart bemessene Speicherkondensatoren vorgesehen, dass sie während einer vorgebbaren Zeitspanne mit Sicherheit auf einem Mindestniveau geladen bleiben, so dass eine Wiederaufnahme des Traktionsbetriebes über den Traktionswechselrichter nach Beendigung der Stromschienenlücke in einfacher Weise rasch möglich ist.

### Nachteile des Standes der Technik

Beim Passieren der Trennstelle ist die Zeit häufig nicht ausreichend um, nach Öffnen des Hauptschalters bzw. nach dem der Zwischenkreis schlagartig nicht mehr versorgt wird, die Motoren zu erregen und den Zwischenkreis zu stützen, bevor die Versorgung zusammenbricht. Somit die Hilfsbetriebeversorgung beim Passieren der Trennstelle zusammenbrechen.

Ferner führt der Übergang von Fahrtbetrieb in den Stützbremsbetrieb beim Einfahren in die Trennstelle dazu, dass eine Verminderung der Fahrtgeschwindigkeit auftritt.

### Problemstellung

Es ist daher Aufgabe der vorliegenden Erfindung, ein Schienenfahrzeug und ein Verfahren zum Überbrücken einer Stromlücke beim Durchfahren einer Trennstelle mit einem Schienenfahrzeug bereitzustellen, welche ein zügigeres und/oder energieeffizientes Befahren von Trennstellen und/oder eine zuverlässigere Energieversorgung beim Passieren von Trennstellen ermöglichen.

### Erfindungsgemäße Lösung

Diese Aufgaben werden durch ein Schienenfahrzeug gemäß Anspruch 1 sowie durch ein Verfahren gemäß Ansprüchen 10 und 11 gelöst.

Die Erfindung ist in den Ansprüchen 1, 10 und 12 definiert. Weitere Ausführungsformen, Modifikationen und Verbesserungen ergeben sich anhand der folgenden Beschreibung und der beigefügten Ansprüche.

Gemäß einer Ausführungsform wird ein Schienenfahrzeug bereitgestellt. Das Schienenfahrzeug weist einen Netzumrichter und einen über einen Gleichspannungszwischenkreis mit dem Netzumrichter verbundenen Traktionsstromumrichter zum Speisen einer Traktionsmaschine des Schienenfahrzeugs auf. Ferner weist das Schienenfahrzeug einen zum Speisen von Hilfsbetrieben an den Gleichspannungszwischenkreis angeschlossenen Hilfsbetriebeumrichter, und eine an den Gleichspannungszwischenkreis angeschlossene Traktionsbatterie auf. Die Traktionsbatterie ist eingerichtet, den Gleichspannungszwischenkreis beim Durchfahren einer Trennstelle mit Strom zu versorgen.

Der durch die Traktionsbatterie bereitgestellte Energiespeicher bzw. -puffer ermöglicht es dem Schienenfahrzeug, Trennstellen effektiver und/oder schneller zu durchfahren ohne dass es dabei zu Komforteinbußen der Passagiere kommt.

Das Schienenfahrzeug kann einen Stromabnehmer und einen Hauptschalter aufweisen. Typischerweise kann das Schienenfahrzeug in einem geschlossenen Zustand des Hauptschalters durch den mit einer Oberleitung eines Stromnetzes verbindbaren Stromabnehmer gespeist werden. Das Schienenfahrzeug kann zudem einen Transformator aufweisen, der dazu eingerichtet sein kann, eine Wechselspannung der Oberleitung auf eine niedrigere Wechselspannung zu reduzieren. Beispielsweise kann die Wechselspannung der Oberleitung 15 kV oder 25 kV betragen, und die niedrigere Wechselspannung in einem Bereich von 0,5 kV bis 3 kV liegen. Der Transformator kann zudem mit dem Netzumrichter verbunden sein. Der Netzumrichter kann eingerichtet sein, Gleichstrom für den Gleichspannungszwischenkreis zu erzeugen. Beispielsweise kann der Netzumrichter dazu eingerichtet sein eine Gleichspannung in einem Bereich von 600 V bis 2 kV, z.B. von etwa 1500 V zu erzeugen.

Der über den Gleichspannungszwischenkreis mit dem Netzumrichter verbundene Traktionsstromumrichter kann dazu eingerichtet sein, eine Wechselspannung zum Speisen der Traktionsmaschine zu erzeugen. Beispielsweise kann der Traktionsstromumrichter dazu eingerichtet sein, eine Wechselspannung von etwa 1500 V zu erzeugen.

Der über den Gleichspannungszwischenkreis mit dem Netzumrichter verbundene Hilfsbetriebeumrichter kann dazu eingerichtet sein, eine Wechselspannung zum Speisen der Hilfsbetriebe zu erzeugen. Beispielsweise kann der Hilfsbetriebeumrichter dazu eingerichtet sein eine Wechselspannung von etwa 400 V zu erzeugen. Die Hilfsbetriebe können beispielsweise das Speisen von Klimaanlagen, Beleuchtungen, und/oder eines Bordrestaurant mit elektrischer Energie umfassen.

Die Traktionsbatterie ist an den Gleichspannungszwischenkreis angeschlossen. In einer Ausführungsform weist das Schienenfahrzeug einen Gleichspannungswandler auf, wobei die Traktionsbatterie über den Gleichspannungswandler mit dem Gleichspannungszwischenkreis verbindbar und/oder angeschlossen ist. Die Traktionsbatterie kann eine Kapazität von mindestens 1 kWh, oder sogar mindestens 2 kWh aufweisen. In manchen Ausführungsformen, insbesondere Ausführungsformen, die sich auf Batteriefahrzeuge beziehen, kann die Traktionsbatterie eine Kapazität von mindestens 300 kWh, oder sogar mindestens 2000 kWh aufweisen. Die Traktionsbatterie kann eine Nennspannung von zumindest 750 V, oder sogar zumindest 1500 V aufweisen. In einer beispielhaften Ausführungsform weist die Traktionsbatterie eine Nennspannung von 1000 V auf.

In einer Ausführungsform ändert sich die Nennspannung abhängig von einem Ladezustand der Traktionsbatterie, wobei der Gleichspannungswandler dazu eingerichtet ist, unabhängig von dem Ladezustand der Traktionsbatterie eine konstante Gleichspannung in den Gleichspannungszwischenkreis zu speisen. Der Gleichspannungswandler kann dazu eingerichtet sein, unabhängig von der Spannung des Gleichspannungszwischenkreis eine definierte Gleichspannung für das Laden der Traktionsbatterie bereitzustellen.

In einer Ausführungsform weist das Schienenfahrzeug eine an die Hilfsbetriebe angeschlossene, und insbesondere eine nicht an den Gleichspannungszwischenkreis angeschlossene, Fahrzeugbatterie auf. Die Fahrzeugbatterie kann dazu eingerichtet sein, insbesondere bei Stromausfällen, Notfällen oder Zusammenbrechen des Bordnetzes aus sonstigen Gründen, die Hilfsbetriebe für eine gewisse Zeit, z.B. maximal 30 Minuten, aufrechtzuerhalten.

Typischerweise, ist die Kapazität der Fahrzeugbatterie geringer als die Kapazität der Traktionsbatterie.

Das Schienenfahrzeug kann in unterschiedlichen Betriebsmodi betrieben werden.

Unter einem Normalbetrieb ist zu verstehen, dass das Schienenfahrzeug, insbesondere der Netzumrichter oder der Transformator, über ein Stromnetz, insbesondere über eine Oberleitung, mit elektrischer Energie versorgt wird.

Ein Stützbremsbetrieb umfasst ein generatorisches Betreiben der Traktionsmaschine, wobei der Traktionsstromumrichter den Gleichspannungszwischenkreis speist.

Ein batteriegestützter Betrieb entspricht einem Zustand in dem das Schienenfahrzeug, insbesondere der Netzumrichter oder der Transformator, nicht über ein Stromnetz, insbesondere die Oberleitung, mit elektrischer Energie versorgt wird.

Die Traktionsbatterie ist eingerichtet, den Gleichspannungszwischenkreis, und insbesondere die Traktionsmaschine und/oder die Hilfsbetriebe, mit Strom zu versorgen. Dies führt zu einer Reihe von Vorteilen.

Das Schienenfahrzeug gemäß Ausführungsformen der vorliegenden Offenbarung kann dazu eingerichtet sein, in einem batteriegestützten Betrieb die Traktionsmaschine mit Strom zu versorgen. Dies ermöglicht ein Einfahren und Durchfahren einer Trennstelle mit Traktionsleistung. Die Traktionsbatterie kann dabei so ausgelegt sein, dass das Schienenfahrzeug im batteriegestützten Betrieb über den Gleichspannungszwischenkreis für mindestens 10 min, mindestens 30 min oder sogar mindestens 1 h mit elektrischer Energie versorgt wird. Zusätzlich kann das Schienenfahrzeug dazu eingerichtet sein, in dem batteriegestützten Betrieb die Hilfsbetriebe mit Strom zu versorgen. Vorteilhafterweise kann dabei eine Verminderung der Geschwindigkeit des Schienenfahrzeugs durch einen fehlenden Antrieb (oder Traktionsleistung) und durch das Vermeiden eines Stützbremsbetriebs vermieden werden.

Das Schienenfahrzeug kann gemäß Ausführungsformen der vorliegenden Offenbarung dazu eingerichtet sein, in einem batteriegestützten Betrieb die Hilfsbetriebe mit Strom zu versorgen. Hierbei kann der Traktionsstromumrichter gesperrt sein, wodurch die Traktionsmaschine nicht mit Strom versorgt wird und das Schienenfahrzeug innerhalb der Trennstelle ausrollt. Vorteilhafterweise kann ein Stützbremsbetrieb vermieden werden, in dem die Hilfsbetriebe über den Gleichspannungszwischenkreis durch die Traktionsbatterie mit Strom versorgt wird. Eine Verminderung der Geschwindigkeit des Schienenfahrzeugs durch das Vermeiden eines Stützbremsbetriebs bleibt hierdurch aus.

Bei Verzögern von Schienenfahrzeugen im Normalbetrieb wird häufig die Bremsenergie in das Netz (die Oberleitung) zurückgespeist. Im Bereich einer Trennstelle ist es jedoch nicht möglich, die Bremsenergie in das Netz zurückzuspeisen, wodurch diese Bremsenergie nicht genutzt wird, und stattdessen beispielsweise in Wärme umgesetzt wird.

Das Schienenfahrzeug gemäß Ausführungsformen der vorliegenden Offenbarung ermöglicht im Falle einer Verzögerung im Bereich einer Trennstelle die Nutzung dieser Bremsenergie. Das Schienenfahrzeug kann nämlich dazu eingerichtet sein, ein Aufladen der Traktionsbatterie mit elektrischer Energie aus dem Gleichspannungszwischenkreis mittels der Bremsenergie zu ermöglichen, insbesondere beim Durchfahren einer Trennstelle.

Bevorzugt kann das Schienenfahrzeug im Normalbetrieb dazu eingerichtet sein, die Traktionsbatterie derart aufzuladen, dass noch eine Restladekapazität mit der Größenordnung einer beim Durchfahren einer Trennstelle typischerweise bei der Verzögerung anfallenden Energie vorhanden ist.

Das Schienenfahrzeug gemäß Ausführungsformen der vorliegenden Offenbarung verbessert auch das Durchfahren einer Trennstelle im Stützbremsbetrieb. Die Traktionsbatterie ermöglicht mittels dem Traktionsstromumrichter das Aufmagnetisieren der Traktionsmaschine. Ferner, kann der Stützbremsbetrieb genutzt werden, die Hilfsbetriebe mittels dem Gleichspannungszwischenkreis mit Strom zu versorgen und/oder die Traktionsbatterie mittels dem Gleichspannungszwischenkreis aufzuladen.

Typischerweise weist das Schienenfahrzeug eine Steuerung auf. Die Steuerung kann dazu eingerichtet sein, das Schienenfahrzeug in einem Normalbetrieb, in dem der Netzumrichter mit externer elektrischer Energie versorgt wird und/oder in einem batteriegestützten Betrieb, in dem der Netzumrichter nicht mit externer elektrischer Energie versorgt wird, und/oder in einem Stützbremsbetrieb, in dem die Traktionsmaschine generatorisch betrieben wird und der Traktionsstromumrichter den Gleichspannungszwischenkreis speist, zu betreiben und/oder die Betriebsmodi (typischerweise entsprechend eines Betriebszustands des Schienenfahrzeugs und/oder äußerer Bedingungen) zu wechseln.

In dem Normalbetrieb kann die Steuerung eingerichtet sein, ein Aufladen der Traktionsbatterie mit elektrischer Energie aus dem Gleichspannungszwischenkreis zu steuern und/oder zu begrenzen. Bevorzugt kann die Steuerung konfiguriert sein, die Traktionsbatterie derart aufzuladen, dass eine Restladekapazität mit der Größenordnung einer beim Durchfahren einer Trennstelle typischerweise bei der Verzögerung anfallenden Energie vorhanden ist.

Ferner, kann in dem Stützbremsbetrieb die Steuerung eingerichtet sein, das Aufladen der Traktionsbatterie mit elektrischer Energie aus dem Gleichspannungszwischenkreis zu steuern und/oder zu begrenzen.

In dem Stützbremsbetrieb kann die Steuerung zudem eingerichtet sein, die Traktionsmaschine generatorisch zu betreiben, und insbesondere den Traktionsstromumrichter zum Aufmagnetisieren der Traktionsmaschine zu veranlassen und/oder den Traktionsstromumrichter zu aktivieren.

Auch im batteriegestützten Betrieb kann die Steuerung eingerichtet sein, den Traktionsstromumrichter zum Aufmagnetisieren der Traktionsmaschine des Traktionsmotors zu veranlassen und/oder den Traktionsstromumrichter zu aktivieren.

Im batteriegestützten Betrieb kann die Steuerung zudem eingerichtet sein, bei Bedarf den Traktionsstromumrichter zu sperren, sodass die Traktionsmaschine nicht mit Strom versorgt und das Schienenfahrzeug innerhalb der Trennstelle ausrollen kann. Die Steuerung kann dabei eingerichtet sein, die Hilfsbetriebe mittels dem Gleichspannungszwischenkreis mit Strom zu versorgen.

Gemäß einer Ausführungsform kann die Steuerung eingerichtet sein, einen Ausfall oder eine Unterbrechung der externen Energieversorgung zu detektieren. Die Steuerung kann weiter eingerichtet sein, den Hauptschalter zu öffnen und/oder Pantographen des Schienenfahrzeugs abzusenken.

Gemäß einer Ausführungsform kann das Schienenfahrzeug in einem hybriden Betriebsmodus betrieben werden. Unter einem hybriden Betriebsmodus ist dabei zu verstehen, dass außerhalb einer Trennstelle, in dem der Netzumrichter mit externer elektrischer Energie versorgt wird, der Gleichspannungszwischenkreis mit elektrischer Energie aus der Traktionsbatterie versorgt wird oder der Gleichspannungszwischenkreis sowohl mit externer elektrischer Energie als auch mit elektrischer Energie aus der Traktionsbatterie versorgt wird. Eine wahlweise Energieversorgung des Schienenfahrzeugs im Normalbetrieb nur aus der Traktionsbatterie oder sowohl aus der Traktionsbatterie als auch mit externer elektrischer Energie kann vorteilhaft sein, wenn ein (erwarteter) Wirkungsgrad oder eine Wirkungsgradkette in einem Betriebspunkt oder Lastpunkt höher ist als bei Energiebezug nur mittels externer elektrischer Energie.

Gemäß einer Ausführungsform ist das Schienenfahrzeug, insbesondere die Steuerung, dazu eingerichtet, das Schienenfahrzeug je nach Betriebspunkt so zu steuern, dass der Gleichspannungszwischenkreis mit externer elektrischer Energie und/oder elektrischer Energie aus der Traktionsbatterie versorgt ist.

Gemäß einer Ausführungsform wird ein Verfahren zum Überbrücken einer Stromlücke beim Durchfahren einer Trennstelle mit einem Schienenfahrzeug gemäß einem der hierin beschriebenen Ausführungsformen bereitgestellt. Das Verfahren umfasst mindestens einen der nachfolgend beschriebenen Schritte a) bis g).
a) Speisen der Traktionsmaschine durch die Traktionsbatterie über den an den Gleichspannungszwischenkreis angeschlossenen Traktionsstromumrichter und Speisen der Hilfsbetriebe durch die Traktionsbatterie über den an den Gleichspannungszwischenkreis angeschlossenen Hilfsbetriebeumrichter.
   Die Traktionsbatterie kann dabei so ausgelegt sein, dass das Schienenfahrzeug im batteriegestützten Betrieb über den Gleichspannungszwischenkreis für mindestens 10 min, mindestens 30 min oder sogar mindestens 1 h mit elektrischer Energie versorgt wird. Vorteilhafterweise bleibt eine Verminderung der Geschwindigkeit des Schienenfahrzeugs durch einen fehlenden Antrieb (oder Traktionsleistung) und durch das Vermeiden eines Stützbremsbetriebs aus.
b) Speisen der Hilfsbetriebe durch die Traktionsbatterie über den an den Gleichspannungszwischenkreis angeschlossenen Hilfsbetriebeumrichter, und Sperren des Traktionsstromumrichters.
   Durch das Sperren des Traktionsstromumrichters wird die Traktionsmaschine nicht mit Strom versorgt und das Schienenfahrzeug rollt innerhalb der Trennstelle aus. Vorteilhafterweise kann ein Stützbremsbetrieb vermieden werden, in dem die Traktionsbatterie über den Gleichspannungszwischenkreis die Hilfsbetriebe mit Strom versorgt. Eine Verminderung der Geschwindigkeit des Schienenfahrzeugs durch das Vermeiden eines Stützbremsbetriebs bleibt hierdurch aus. Dies kann u.a. dann günstig sein, wenn eine Verzögerung im Betriebsablauf im Schienennetz unerwünscht ist.
c) Aufladen der Traktionsbatterie im Stützbremsbetrieb.
d) Aufmagnetisieren der Traktionsmaschine über den an den Gleichspannungszwischenkreis angeschlossenen Traktionsstromumrichter. Der Gleichspannungszwischenkreis wird dabei durch die Traktionsbatterie gespeist.
e) Speisen der Hilfsbetriebe durch die Traktionsbatterie über den an den Gleichspannungszwischenkreis angeschlossenen Hilfsbetriebeumrichter.
   Vorteilhafterweise können die Schritte c), d) und e) teilweise und oder vollständig kombiniert ausgeführt werden.
f) Erstellen einer Betriebspunktsanalyse des Schienenfahrzeugs.

Die Aufgabe der Betriebspunktsanalyse kann es sein zu bestimmen, ob der Normalbetrieb oder der hybride Betriebsmodus ausgeführt wird. Die Betriebspunktsanalyse umfasst die Bestimmung eines Wirkungsgrades (oder der Wirkungsgradkette) in einem Betriebspunkt bei Energiebezug nur durch externe elektrische Energie, bei Energiebezug nur durch die Traktionsbatterie, als auch bei Energiebezug sowohl durch externe Energie als auch durch die Traktionsbatterie.

g) Versorgen des Gleichspannungszwischenkreises mit elektrischer Energie aus der Traktionsbatterie, wenn dadurch gemäß der Betriebspunktanalyse eine Erhöhung des Wirkungsgrads des Schienenfahrzeugs erwartet wird, oder das Versorgen des Gleichspannungszwischenkreises mit elektrischer Energie aus der Traktionsbatterie als auch durch externe elektrische Energie, wenn dadurch gemäß der Betriebspunktanalyse eine Erhöhung des Wirkungsgrads des Schienenfahrzeugs erwartet wird.

h) Versorgen der Traktionsbatterie mit elektrischer Energie aus dem Gleichspannungszwischenkreis wenn dadurch gemäß der Betriebspunktanalyse eine Erhöhung des Wirkungsgrads des Schienenfahrzeugs erwartet wird.

Gemäß einer Ausführungsform wird ein Verfahren zum energieeffizienten Antreiben einer Traktionsmaschine eines Schienenfahrzeugs bereitgestellt. Das Schienenfahrzeug weist einen Netzumrichter, einen über einen Gleichspannungszwischenkreis mit dem Netzumrichter verbundenen Traktionsstromumrichter zum Speisen der Traktionsmaschine des Schienenfahrzeugs, einen zum Speisen von Hilfsbetrieben an den Gleichspannungszwischenkreis angeschlossenen Hilfsbetriebeumrichter und eine an den Gleichspannungszwischenkreis angeschlossene Traktionsbatterie auf. Das Verfahren umfasst mindestens die folgenden Schritte a) und b):
a) Erstellen einer Betriebspunktsanalyse des Schienenfahrzeugs; und
b) Versorgen des Gleichspannungszwischenkreises mit elektrischer Energie aus der Traktionsbatterie, wenn dadurch gemäß der Betriebspunktanalyse eine Erhöhung des Wirkungsgrads des Schienenfahrzeugs erwartet wird, und insbesondere Sperren des Traktionsstromumrichters;
c) Versorgen des Gleichspannungszwischenkreises mit externer elektrischer Energie, wenn dadurch gemäß der Betriebspunktanalyse eine Erhöhung des Wirkungsgrads des Schienenfahrzeugs erwartet wird;
d) Versorgen des Gleichspannungszwischenkreises mit elektrischer Energie aus der Traktionsbatterie als auch mit externer elektrischer Energie, wenn dadurch gemäß der Betriebspunktanalyse eine Erhöhung des Wirkungsgrads des Schienenfahrzeugs erwartet wird, insbesondere wobei die elektrische Energie aus der Traktionsbatterie und die externer elektrischer Energie unterschiedlich gewichtet werden.

Das Schienenfahrzeug kann ein Schienenfahrzeug gemäß einem der hierin beschriebenen Ausführungsformen sein. Gemäß einer Ausführungsform weist das Schienenfahrzeug einen mit dem Netzumrichter verbundenen Transformator auf. Gemäß einer Ausführungsform weist das Schienenfahrzeug einen mit dem Transformator verbindbaren Stromabnehmer, insbesondere einen Pantographen, auf.

### Figuren

Nachfolgend wird die Erfindung anhand von Ausführungsformen näher erläutert, ohne dass diese den durch die Ansprüche definierten Schutzbereich einschränken sollen.

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu. Gleiche Bezugszeichen bezeichnen entsprechend ähnliche Teile.

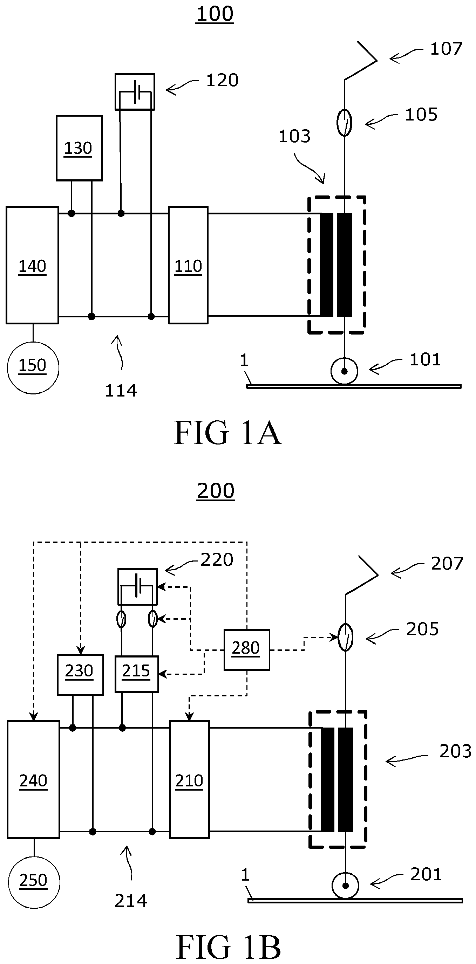

Figur 1A zeigt elektrische Komponenten eines Schienenfahrzeugs gemäß einer Ausführungsform.
Figur 1B zeigt elektrische Komponenten eines Schienenfahrzeugs gemäß einer Ausführungsform.

### Ausführungsbeispiele

Figur 1A zeigt - in schematischer Darstellung - elektrische Komponenten und mechanische Komponenten eines Schienenfahrzeugs 100. Das Schienenfahrzeug 100 kann Räder 101 aufweisen, die mit Schienen 1 kontaktierbar sind. Die Schienen 1 für die Räder können als (elektrische) Masse verwendbar sein.

Das Schienenfahrzeug 100 weist einen Stromabnehmer 107 auf. Der Stromabnehmer 107 kann als Pantograph ausgeführt sein. Der Stromabnehmer 107 ist verbindbar mit einem Stromnetz, insbesondere einer Oberleitung.

Das Schienenfahrzeug 100 kann einen mit dem Stromabnehmer 107 verbindbaren Transformator 103 aufweisen. Der Transformator 103 kann dazu eingerichtet sein, eine Wechselspannung des Stromnetzes auf eine niedrigere Wechselspannung zu reduzieren. Der Stromabnehmer 107 kann dabei über einen Hauptschalter 105 mit dem Transformator 103 verbunden sein. Das Schienenfahrzeug 100 kann zudem eingerichtet sein, bei einem Ausfall oder einer Unterbrechung der externen Energieversorgung den Hauptschalter 105 zu öffnen, und/oder den Pantographen abzusenken.

Das in Figur 1A dargestellte Schienenfahrzeug 100 weist einen Gleichspannungszwischenkreis 114 auf. Der Gleichspannungszwischenkreis 114 ist mit einem Netzumrichter 110 verbunden. Der Netzumrichter 110 kann dazu eingerichtet sein, Gleichspannung für den Gleichspannungszwischenkreis 114 zu erzeugen.

An den Gleichspannungszwischenkreis 114 kann ein Hilfsbetriebeumrichter 130 und ein Traktionsstromumrichter 140 angeschlossen sein. Der Hilfsbetriebeumrichter 130 kann dazu eingerichtet sein, eine Wechselspannung zum Speisen von Hilfsbetrieben zu erzeugen. Der Traktionsstromumrichter 140 kann dazu eingerichtet sein, eine Wechselspannung zum Speisen einer mit dem Traktionsstromumrichter 140 verbundenen Traktionsmaschine 150 zu erzeugen.

Das Schienenfahrzeug 100 weist eine an den Gleichspannungszwischenkreis 114 angeschlossene Traktionsbatterie 120 auf. Die Traktionsbatterie 120 ist eingerichtet den Gleichspannungszwischenkreis 114 beim Durchfahren einer Trennstelle mit Strom zu versorgen.

Figur 1B zeigt - in schematischer Darstellung - elektrische Komponenten und mechanische Komponenten eines Schienenfahrzeugs 200 gemäß einer weiteren Ausführungsform. Das Schienenfahrzeug 200 kann Räder 201 aufweisen, die mit Schienen 1 kontaktierbar sind. Die Schienen 1 können als Masse verwendbar sein.

Das Schienenfahrzeug weist einen Stromabnehmer 207 auf. Der Stromabnehmer 207 kann ein Pantograph sein. Der Stromabnehmer 207 ist verbindbar mit einem Stromnetz, insbesondere einer Oberleitung.

Das Schienenfahrzeug 200 kann einen mit dem Stromabnehmer 207 verbindbaren Transformator 203 aufweisen. Der Transformator 203 kann dazu eingerichtet sein, eine Wechselspannung des Stromnetzes auf eine niedrigere Wechselspannung zu reduzieren. Der Stromabnehmer 207 kann dabei über einen Hauptschalter 205 mit dem Transformator 203 verbunden sein. Das Schienenfahrzeug 200 kann dazu eingerichtet sein, bei einem Ausfall oder einer Unterbrechung der externen Energieversorgung den Hauptschalter 205 zu öffnen, und/oder den Pantographen abzusenken.

Das in Figur 1B dargestellte Schienenfahrzeug 200 weist einen Gleichspannungszwischenkreis 214 auf. Der Gleichspannungszwischenkreis 214 ist mit einem Netzumrichter 210 verbunden. Der Netzumrichter 210 kann dazu eingerichtet sein, Gleichspannung für den Gleichspannungszwischenkreis 214 zu erzeugen.

An den Gleichspannungszwischenkreis 214 können ein Hilfsbetriebeumrichter 230 und ein Traktionsstromumrichter 240 angeschlossen sein. Der Hilfsbetriebeumrichter 230 kann dazu eingerichtet sein, eine Wechselspannung zum Speisen von Hilfsbetrieben zu erzeugen. Der Traktionsstromumrichter 240 kann dazu eingerichtet sein, eine Wechselspannung zum Speisen einer mit dem Traktionsstromumrichter 240 verbundenen Traktionsmaschine 250 zu erzeugen.

Das Schienenfahrzeug 200 weist eine an den Gleichspannungszwischenkreis 214 angeschlossene Traktionsbatterie 220 auf. Die Traktionsbatterie 220 ist eingerichtet, den Gleichspannungszwischenkreis 214 beim Durchfahren einer Trennstelle mit Strom zu versorgen. Ferner, kann das Schienenfahrzeug 200 einen Gleichspannungswandler 215 aufweisen. Die Traktionsbatterie 220 kann über den Gleichspannungswandler 215 mit dem Gleichspannungszwischenkreis 214 verbindbar sein.

Das Schienenfahrzeug 200 kann, wie beispielhaft in Figur 1B dargestellt, eine Steuerung 280 aufweisen. Die Steuerung 280 kann eingerichtet sein, das Schienenfahrzeug 200 in einem Normalbetrieb, in dem der Netzumrichter 210 mit externer elektrischer Energie versorgt wird, und/oder in einem batteriegestützten Betrieb, in dem der Netzumrichter 210 nicht mit externer elektrischer Energie versorgt wird, und/oder in einem Stützbremsbetrieb, in dem die Traktionsmaschine 250 generatorisch betrieben wird und der Traktionsstromumrichter 240 den Gleichspannungszwischenkreis 214 speist, zu betreiben. Die Steuerung 280 kann dazu eingerichtet sein, mindestens eines oder alle ausgewählt aus der Gruppe bestehend aus dem Hauptschalter 205, dem Netzumrichter 210, dem Hilfsbetriebeumrichter 230, dem Traktionsstromumrichter 240, Gleichspannungswandler 215 und der Traktionsbatterie 220 zu steuern.

Wenngleich hierin spezifische Ausführungsformen dargestellt und beschrieben worden sind, liegt es im Rahmen der vorliegenden Erfindung, die gezeigten Ausführungsformen geeignet zu modifizieren, ohne vom Schutzbereich der vorliegenden Erfindung abzuweichen.

### Bezugszeichenliste

- 1: Schiene (Masse)
- 100, 200: Schienenfahrzeug
- 101, 201: Rad
- 103, 203: Transformator
- 105, 205: Hauptschalter
- 107,207: Stromabnehmer
- 110,210: Netzumrichter
- 114,214: Gleichspannungszwischenkreis
- 120,220: Traktionsbatterie
- 130, 230: Hilfsbetriebeumrichter
- 140,240: Traktionsstromumrichter
- 150, 250: Traktionsmaschine
- 215: Gleichspannungswandler
- 280: Steuerung

## Patentansprüche

1. Schienenfahrzeug (100, 200), aufweisend:
einen Netzumrichter (110, 210);
einen über einen Gleichspannungszwischenkreis (114, 214) mit dem Netzumrichter (110, 210) verbundenen Traktionsstromumrichter (140, 240) zum Speisen einer Traktionsmaschine (150, 250) des Schienenfahrzeugs (100, 200);
einen zum Speisen von Hilfsbetrieben an den Gleichspannungszwischenkreis (114, 214) angeschlossenen Hilfsbetriebeumrichter (130, 230); und
eine an den Gleichspannungszwischenkreis (114, 214) angeschlossene Traktionsbatterie (120, 220), wobei die Traktionsbatterie (120, 220) eingerichtet ist, den Gleichspannungszwischenkreis (114, 214) beim Durchfahren einer Trennstelle mit Strom zu versorgen;
wobei in einem Normalbetrieb das Schienenfahrzeug über ein Stromnetz mit elektrischer Energie versorgt wird; und die Traktionsbatterie (120, 220) mit elektrischer Energie aus dem Gleichspannungszwischenkreis (114, 214) aufgeladen wird;
wobei das Schienenfahrzeug dazu eingerichtet ist, in einem hybriden Betriebsmodus betrieben zu werden, wobei außerhalb der Trennstelle, in dem der Netzumrichter mit externer elektrischer Energie versorgt wird, der Gleichspannungszwischenkreis nur mit elektrischer Energie aus der Traktionsbatterie versorgt wird oder der Gleichspannungszwischenkreis sowohl mit externer elektrischer Energie als auch mit elektrischer Energie aus der Traktionsbatterie versorgt wird;
wobei das Schienenfahrzeug dazu eingerichtet ist eine Betriebspunktsanalyse des Schienenfahrzeugs zu erstellen zum Bestimmen ob der Normalbetrieb oder der hybride Betriebsmodus ausgeführt wird;
wobei die Betriebspunktsanalyse die Bestimmung eines Wirkungsgrades in einem Betriebspunkt bei Energiebezug nur durch externe elektrische Energie, bei Energiebezug nur durch die Traktionsbatterie, als auch bei Energiebezug sowohl durch externe Energie als auch durch die Traktionsbatterie umfasst.

2. Schienenfahrzeug (100, 200) nach Anspruch 1, aufweisend eine Steuerung (280), die eingerichtet ist, das Schienenfahrzeug (100, 200) in einem Normalbetrieb, in dem der Netzumrichter (110, 210) mit externer elektrischer Energie versorgt wird, in einem batteriegestützten Betrieb, in dem der Netzumrichter (110, 210) nicht mit externer elektrischer Energie versorgt wird, und/oder in einem Stützbremsbetrieb, in dem die Traktionsmaschine (150, 250) generatorisch betrieben wird und der Traktionsstromumrichter (140, 240) den Gleichspannungszwischenkreis (114, 214) speist, zu betreiben.

3. Schienenfahrzeug (100, 200) nach einem der vorherigen Ansprüche, wobei die Traktionsbatterie (120, 220) eine Kapazität von zumindest 1 kWh, oder sogar 2 kWh aufweist, wobei die Traktionsbatterie (120, 220) eine Nennspannung von zumindest 750 V, oder sogar zumindest 1500 V aufweist, und/oder wobei die Traktionsbatterie (120, 220) so ausgelegt ist, dass das Schienenfahrzeug (100, 200) im batteriegestützten Betrieb über den Gleichspannungszwischenkreis (114, 214) für mindestens 10 min, mindestens 30 min oder sogar mindestens 1 h mit elektrischer Energie zu versorgen.

4. Schienenfahrzeug (100, 200) nach Anspruch 2 oder 3, wobei die Steuerung (280) im Normalbetrieb eingerichtet ist, ein Aufladen der Traktionsbatterie (120, 220) mit elektrischer Energie aus dem Gleichspannungszwischenkreis (114, 214) zu steuern und/oder zu begrenzen.

5. Schienenfahrzeug (100, 200) nach einem der Ansprüche 2 oder 4, wobei die Steuerung (280) im Stützbremsbetrieb eingerichtet ist, das Aufladen der Traktionsbatterie (120, 220) mit elektrischer Energie aus dem Gleichspannungszwischenkreis (114, 214) zu steuern.

6. Schienenfahrzeug (100, 200) nach einem der Ansprüche 2 bis 5, wobei die Steuerung (280) eingerichtet ist, einen Ausfall oder eine Unterbrechung der externen Energieversorgung zu detektieren und/oder den Traktionsstromumrichter (140, 240) zu sperren, um das Schienenfahrzeug (100, 200) im batteriegestützten Betrieb zu betreiben.

7. Schienenfahrzeug (100, 200) nach einem der Ansprüche 2 bis 6, wobei die Steuerung (280) im batteriegestützten Betrieb eingerichtet ist, den Traktionsstromumrichter (140, 240) zum Aufmagnetisieren der Traktionsmaschine zu veranlassen und/oder den Traktionsstromumrichter (140, 240) zu aktivieren.

8. Schienenfahrzeug (100, 200) nach einem der Ansprüche 2 bis 6, wobei die Steuerung (280) eingerichtet ist, das Schienenfahrzeug (100, 200) je nach Betriebspunkt so zu steuern, dass der Gleichspannungszwischenkreis (114, 214) mit externer elektrischer Energie und/oder elektrischer Energie aus der Traktionsbatterie (120, 220) zu versorgen.

9. Schienenfahrzeug (100, 200) nach einem der vorherigen Ansprüche, wobei die Traktionsbatterie (120, 220) über einen Gleichspannungswandler (215) mit dem Gleichspannungszwischenkreis (114, 214) verbindbar ist.

10. Verfahren zum Überbrücken einer Stromlücke beim Durchfahren einer Trennstelle mit einem Schienenfahrzeugs gemäß einem der Ansprüche 1 bis 9, wobei das Verfahren die folgenden Schritte aufweist:
a) Erstellen einer Betriebspunktsanalyse des Schienenfahrzeugs (100, 200);
b) Versorgen des Gleichspannungszwischenkreises (114, 214) mit elektrischer Energie aus der Traktionsbatterie (120, 220) wenn dadurch gemäß der Betriebspunktanalyse eine Erhöhung des Wirkungsgrads des Schienenfahrzeugs erwartet wird; und
c) Versorgen der Traktionsbatterie (120, 220) mit elektrischer Energie aus dem Gleichspannungszwischenkreis (114, 214), wenn dadurch gemäß der Betriebspunktanalyse eine Erhöhung des Wirkungsgrads des Schienenfahrzeugs erwartet wird;
wobei die Betriebspunktsanalyse die Bestimmung eines Wirkungsgrades in einem Betriebspunkt bei Energiebezug nur durch externe elektrische Energie, bei Energiebezug nur durch die Traktionsbatterie, als auch bei Energiebezug sowohl durch externe Energie als auch durch die Traktionsbatterie umfasst.

11. Verfahren nach Anspruch 10, ferner aufweisend mindestens einen der folgenden Schritte:
d) Speisen der Traktionsmaschine (150, 250) durch die Traktionsbatterie (120, 220) über den an den Gleichspannungszwischenkreis (114, 214) angeschlossenen Traktionsstromumrichter (140, 240), und Speisen der Hilfsbetriebe durch die Traktionsbatterie (120, 220) über den an den Gleichspannungszwischenkreis (114, 214) angeschlossenen Hilfsbetriebeumrichter (130, 230);
e) Speisen der Hilfsbetriebe durch die Traktionsbatterie (120, 220) über den an den Gleichspannungszwischenkreis (114, 214) angeschlossenen Hilfsbetriebeumrichter (130, 230), und Sperren des Traktionsstromumrichters (140, 240);
f) Aufladen der Traktionsbatterie (120, 220) im Stützbremsbetrieb;
g) Aufmagnetisieren der Traktionsmaschine (150, 250) über den an den Gleichspannungszwischenkreis (114, 214) angeschlossenen Traktionsstromumrichter (140, 240), wobei der Gleichspannungszwischenkreis (114, 214) durch die Traktionsbatterie (120, 220) gespeist wird; und
h) Speisen der Hilfsbetriebe durch die Traktionsbatterie (120, 220) über den an den Gleichspannungszwischenkreis (114, 214) angeschlossenen Hilfsbetriebeumrichter (130, 230);

12. Verfahren zum energieeffizienten Antreiben einer Traktionsmaschine (150, 250) eines Schienenfahrzeugs (100, 200), wobei das Schienenfahrzeug einen Netzumrichter (110, 210), einen über einen Gleichspannungszwischenkreis (114, 214) mit dem Netzumrichter (110, 210) verbundenen Traktionsstromumrichter (140, 240) zum Speisen der Traktionsmaschine (150, 250) des Schienenfahrzeugs (100, 200), einen zum Speisen von Hilfsbetrieben an den Gleichspannungszwischenkreis (114, 214) angeschlossenen Hilfsbetriebeumrichter (130, 230), und eine an den Gleichspannungszwischenkreis (114, 214) angeschlossene Traktionsbatterie (120, 220) aufweist, wobei das Verfahren mindestens die folgenden Schritte aufweist:
a) Erstellen einer Betriebspunktsanalyse des Schienenfahrzeugs (100, 200) zum Bestimmen ob ein Normalbetrieb oder ein hybrider Betriebsmodus ausgeführt wird; wobei in einem Normalbetrieb das Schienenfahrzeug über ein Stromnetz mit elektrischer Energie versorgt wird; und die Traktionsbatterie (120, 220) mit elektrischer Energie aus dem Gleichspannungszwischenkreis (114, 214) aufgeladen wird; und wobei unter einem hybriden Betriebsmodus zu verstehen ist, dass außerhalb der Trennstelle, in dem der Netzumrichter mit externer elektrischer Energie versorgt wird, der Gleichspannungszwischenkreis nur mit elektrischer Energie aus der Traktionsbatterie versorgt wird oder der Gleichspannungszwischenkreis sowohl mit externer elektrischer Energie als auch mit elektrischer Energie aus der Traktionsbatterie versorgt wird;
b) Versorgen des Gleichspannungszwischenkreises (114, 214) mit elektrischer Energie aus der Traktionsbatterie (120, 220), wenn dadurch gemäß der Betriebspunktanalyse eine Erhöhung des Wirkungsgrads des Schienenfahrzeugs erwartet wird, und insbesondere Sperren des Traktionsstromumrichters (140, 240);
c) Versorgen des Gleichspannungszwischenkreises (114, 214) mit externer elektrischer Energie, wenn dadurch gemäß der Betriebspunktanalyse eine Erhöhung des Wirkungsgrads des Schienenfahrzeugs erwartet wird;
d) Versorgen des Gleichspannungszwischenkreises (114, 214) mit elektrischer Energie aus der Traktionsbatterie (120, 220) als auch mit externer elektrischer Energie, wenn dadurch gemäß der Betriebspunktanalyse eine Erhöhung des Wirkungsgrads des Schienenfahrzeugs erwartet wird, insbesondere wobei die elektrische Energie aus der Traktionsbatterie (120, 220) und die externer elektrischer Energie unterschiedlich gewichtet werden;
wobei die Betriebspunktsanalyse die Bestimmung eines Wirkungsgrades in einem Betriebspunkt bei Energiebezug nur durch externe elektrische Energie, bei Energiebezug nur durch die Traktionsbatterie, als auch bei Energiebezug sowohl durch externe Energie als auch durch die Traktionsbatterie umfasst.

13. Verfahren nach Anspruch 12, wobei das Schienenfahrzeug (100, 200) einen mit dem Netzumrichter (110, 210) verbundenen Transformator (203), und/oder einen mit dem Transformator (203) verbindbaren Stromabnehmer (207), insbesondere einen Pantographen, aufweist.

## Claims

1. A rail vehicle (100, 200), having:
a grid converter (110, 210);
a traction converter (140, 240) connected to the grid converter (110, 210) via a DC voltage intermediate circuit (114, 214) for supplying a traction motor (150, 250) of the rail vehicle (100, 200);
an auxiliary converter (130, 230) connected to the DC intermediate circuit (114, 214) for supplying auxiliary systems; and
a traction battery (120, 220) connected to the DC intermediate circuit (114, 214), wherein the traction battery (120, 220) is configured to supply the DC intermediate circuit (114, 214) with current when passing through a separation point;
wherein, during normal operation, the rail vehicle is supplied with electrical energy via an electrical grid; and the traction battery (120, 220) is charged with electrical energy from the DC intermediate circuit (114, 214);
wherein the rail vehicle is configured to be operated in a hybrid operating mode, wherein, outside of the separation point, the grid converter is supplied with external electrical energy, and the DC intermediate circuit is only supplied with electrical energy from the traction battery, or the DC intermediate circuit is supplied both with external electrical energy and also with electrical energy from the traction battery;
wherein the rail vehicle is configured to generate an operating point analysis of the rail vehicle to determine whether the normal operation or the hybrid operating mode is carried out;
wherein the operating point analysis includes the determination of an efficiency in an operating point for energy supply only by external electrical energy, for energy supply only by the traction battery, and also for energy supply by both external energy and also by the traction battery.

2. The rail vehicle (100, 200) according to claim 1, having a controller (280) configured to operate the rail vehicle (100, 200) in a normal operation in which the grid converter (110, 210) is supplied with external electrical energy, in a battery-supported operation in which the grid converter (110, 210) is not supplied with external electrical energy, and/or in a regenerative braking operation in which the traction motor (150, 250) is operated as a generator and the traction converter (140, 240) supplies the DC intermediate circuit (114, 214).

3. The rail vehicle (100, 200) according to any one of the preceding claims, wherein the traction battery (120, 220) has a capacity of at least 1 kWh or even 2 kWh, wherein the traction battery (120, 220) has a rated voltage of at least 750 V or even at least 1500 V, and/or wherein the traction battery (120, 220) is designed to supply the rail vehicle (100, 200) with electrical energy in the battery-supported operation via the DC intermediate circuit (114, 214) for at least 10 min, at least 30 min, or even at least 1 h.

4. The rail vehicle (100, 200) according to claim 2, or 3, wherein the controller (280) is configured to control and/or to limit a charging of the traction battery (120, 220) with electrical energy from the DC intermediate circuit (114, 214) in normal operation.

5. The rail vehicle (100, 200) according to claim 2 or 4, wherein the controller (280) is configured to control the charging of the traction battery (120, 220) with electrical energy from the DC intermediate circuit (114, 214) in regenerative braking operation.

6. The rail vehicle (100, 200) according to any one of claims 2 to 5, wherein the controller (280) is configured to detect a failure or an interruption of the external energy supply and/or to block the traction converter (140, 240) in order to operate the rail vehicle (100, 200) in battery-supported operation.

7. The rail vehicle (100, 200) according to any one of claims 2 to 6, wherein in battery-supported operation, the controller (280) is configured to initiate the traction converter (140, 240) to magnetize the traction motor and/or to activate the traction converter (140, 240).

8. The rail vehicle (100, 200) according to any one of claims 2 to 6, wherein the controller (280) is configured to control the rail vehicle (100, 200) depending on the operating point such that the DC intermediate circuit (114, 214) is supplied with external electrical energy and/or electrical energy from the traction battery (120, 220).

9. The rail vehicle (100, 200) according to any one of the preceding claims, wherein the traction battery (120, 220) is connectable to the DC intermediate circuit (114, 214) via a DC-DC converter (215).

10. A method for bridging a current gap when passing through a separation point with a rail vehicle according to any one of claims 1 to 9, wherein the method has the following steps:
a) generating an operating point analysis of the rail vehicle (100, 200);
b) supplying the DC intermediate circuit (114, 214) with electrical energy from the traction battery (120, 220) if an increase in the efficiency of the rail vehicle is expected by this means according to the operating point analysis; and
c) supplying the traction battery (120, 220) with electrical energy from the DC intermediate circuit (114, 214) if an increase in the efficiency of the rail vehicle is expected by this means according to the operating point analysis;
wherein the operating point analysis includes the determination of an efficiency in an operating point for energy supply only by external electrical energy, for energy supply only by the traction battery, and also for energy supply by both external energy and also by the traction battery.

11. The method according to claim 10, further having at least one of the following steps:
d) supplying the traction motor (150, 250) by the traction battery (120, 220) via the traction converter (140, 240) connected to the DC intermediate circuit (114, 214), and supplying the auxiliary systems by the traction battery (120, 220) via auxiliary system inverter (130, 230) connected to the DC intermediate circuit (114, 214);
e) supplying the auxiliary systems by the traction battery (120, 220) via the auxiliary system inverter (130, 230) connected to the DC intermediate circuit (114, 214), and blocking the traction converter (140, 240);
f) charging the traction battery (120, 220) in the regenerative braking operation;
g) magnetizing the traction motor (150, 250) via the traction converter (140, 240) connected to the DC intermediate circuit (114, 214), wherein the DC intermediate circuit (114, 214) is supplied via the traction battery (120, 220); and
h) supplying the auxiliary systems by the traction battery (120, 220) via the auxiliary systems inverter (130, 230) connected to the DC intermediate circuit (114, 214).

12. A method for energy-efficient driving of a traction motor (150, 250) of a rail vehicle (100, 200), wherein the rail vehicle has a grid converter (110, 210), a traction converter (140, 240) connected to the grid converter (110, 210) via a DC voltage intermediate circuit (114, 214) for supplying a traction motor (150, 250) of the rail vehicle (100, 200), an auxiliary systems converter (130, 230) connected to the DC intermediate circuit (114, 214) for supplying auxiliary systems, and a traction battery (120, 220) connected to the DC intermediate circuit (114, 214), wherein the method has at least the following steps:
a) generating an operating point analysis of the rail vehicle (100, 200) to determine whether a normal operation or a hybrid operating mode is carried out; wherein the rail vehicle is supplied with electrical energy via an electrical grid, and the traction battery (120, 220) is charged with electrical energy from the DC intermediate circuit (114, 214) in a normal operation; and wherein a hybrid operating mode is understood to mean that, outside of the separation point, in said operating mode, the grid converter is supplied with external electrical energy, the DC intermediate circuit is only supplied with electrical energy from the traction battery, or the DC intermediate circuit is supplied both with external electrical energy and also with electrical energy from the traction battery;
b) supplying the DC intermediate circuit (114, 214) with electrical energy from the traction battery (120, 220) if an increase in the efficiency of the rail vehicle is expected by this means according to the operating point analysis, and in particular blocking the traction converter (140, 240);
c) supplying the DC intermediate circuit (114, 214) with external electrical energy if an increase in the efficiency of the rail vehicle is expected by this means according to the operating point analysis;
d) supplying the DC intermediate circuit (114, 214) with electrical energy from the traction battery (120, 220) and also with external electrical energy if an increase in the efficiency of the rail vehicle is expected by this means according to the operating point analysis, in particular wherein the electrical energy from the traction battery (120, 220) and the external electrical energy are differently weighted;
wherein the operating point analysis includes the determination of an efficiency in an operating point for energy supply only by external electrical energy, for energy supply only by the traction battery, and also for energy supply by both external energy and also by the traction battery.

13. The method according to claim 12, wherein the rail vehicle (100, 200) has a transformer (203) connected to the grid converter (110, 210) and/or a current collector (207), in particular a pantograph, connectable to the transformer (203).

## Revendications

1. Véhicule ferroviaire (100, 200), présentant :
un convertisseur de réseau (110, 210) ;
un convertisseur de courant de traction (140, 240) relié au convertisseur de réseau (110, 210) par l'intermédiaire d'un circuit intermédiaire à tension continue (114, 214) pour l'approvisionnement d'une machine de traction (150, 250) du véhicule ferroviaire (100, 200) ;
un convertisseur de systèmes auxiliaires (130, 230) connecté au circuit intermédiaire à tension continue (114, 214) pour l'approvisionnement de systèmes auxiliaires ; et
une batterie de traction (120, 220) connectée au circuit intermédiaire à tension continue (114, 214), dans lequel la batterie de traction (120, 220) est configurée pour alimenter en courant le circuit intermédiaire à tension continue (114, 214) lors du passage par un lieu de coupure ;
dans lequel, dans un fonctionnement normal, le véhicule ferroviaire est alimenté en énergie électrique par l'intermédiaire d'un réseau électrique ; et la batterie de traction (120, 220) est chargée avec de l'énergie électrique provenant du circuit intermédiaire à tension continue (114, 214) ;
dans lequel le véhicule ferroviaire est configuré pour fonctionner dans un mode de fonctionnement hybride, dans lequel, en dehors du lieu de coupure lors duquel le convertisseur de réseau est alimenté en énergie électrique externe, le circuit intermédiaire à tension continue est alimenté uniquement en énergie électrique provenant de la batterie de traction, ou le circuit intermédiaire à tension continue est alimenté à la fois en énergie électrique externe et en énergie électrique provenant de la batterie de traction ;
dans lequel le véhicule ferroviaire est configuré pour réaliser une analyse de point de fonctionnement du véhicule ferroviaire pour déterminer si le fonctionnement normal ou le mode de fonctionnement hybride est mis en oeuvre ;
dans lequel l'analyse de point de fonctionnement comprend la détermination d'un rendement à un point de fonctionnement lorsque l'énergie est fournie uniquement par l'énergie électrique externe, lorsque l'énergie est fournie uniquement par la batterie de traction, ainsi que lorsque l'énergie est fournie à la fois par l'énergie externe et par la batterie de traction.

2. Véhicule ferroviaire (100, 200) selon la revendication 1, présentant une commande (280) qui est configurée pour faire fonctionner le véhicule ferroviaire (100, 200) dans un fonctionnement normal dans lequel le convertisseur de réseau (110, 210) est alimenté en énergie électrique externe, dans un fonctionnement assisté par batterie dans lequel le convertisseur de réseau (110, 210) n'est pas alimenté en énergie électrique externe, et/ou dans un fonctionnement de freinage auxiliaire dans lequel la machine de traction (150, 250) fonctionne par générateur et le convertisseur de courant de traction (140, 240) approvisionne le circuit intermédiaire à tension continue (114, 214).

3. Véhicule ferroviaire (100, 200) selon l'une des revendications précédentes, dans lequel la batterie de traction (120, 220) présente une capacité d'au moins 1 kWh, ou encore de 2 kWh, dans lequel la batterie de traction (120, 220) présente une tension nominale d'au moins 750 V, ou encore d'au moins 1 500 V, et/ou dans lequel la batterie de traction (120, 220) est configurée pour alimenter le véhicule ferroviaire (100, 200) en énergie électrique pendant au moins 10 minutes, au moins 30 minutes, ou encore au moins 1 heure par l'intermédiaire du circuit intermédiaire à tension continue (114, 214) dans le fonctionnement assisté par batterie.

4. Véhicule ferroviaire (100, 200) selon la revendication 2 ou 3, dans lequel, dans le fonctionnement normal, la commande (280) est configurée pour commander et/ou limiter une charge de la batterie de traction (120, 220) avec de l'énergie électrique provenant du circuit intermédiaire à tension continue (114, 214).

5. Véhicule ferroviaire (100, 200) selon l'une des revendications 2 ou 4, dans lequel, dans le fonctionnement de freinage auxiliaire, la commande (280) est configurée pour commander la charge de la batterie de traction (120, 220) avec de l'énergie électrique provenant du circuit intermédiaire à tension continue (114, 214).

6. Véhicule ferroviaire (100, 200) selon l'une des revendications 2 à 5, dans lequel la commande (280) est configurée pour détecter une défaillance ou une interruption de l'alimentation en énergie externe et/ou pour bloquer le convertisseur de courant de traction (140, 240) afin de faire fonctionner le véhicule ferroviaire (100, 200) dans le fonctionnement assisté par batterie.

7. Véhicule ferroviaire (100, 200) selon l'une des revendications 2 à 6, dans lequel, dans le fonctionnement assisté par batterie, la commande (280) est configurée pour amener le convertisseur de courant de traction (140, 240) à magnétiser la machine de traction et/ou pour activer le convertisseur de courant de traction (140, 240).

8. Véhicule ferroviaire (100, 200) selon l'une des revendications 2 à 6, dans lequel la commande (280) est configurée pour commander le véhicule ferroviaire (100, 200), selon le point de fonctionnement, de manière à alimenter le circuit intermédiaire à tension continue (114, 214) en énergie électrique externe et/ou en énergie électrique provenant de la batterie de traction (120, 220).

9. Véhicule ferroviaire (100, 200) selon l'une des revendications précédentes, dans lequel la batterie de traction (120, 220) peut être reliée au circuit intermédiaire à tension continue (114, 214) par l'intermédiaire d'un transducteur de tension continue (215).

10. Procédé permettant de compenser une perte de courant lors du passage par un lieu de coupure avec un véhicule ferroviaire conformément à l'une des revendications 1 à 9, dans lequel le procédé présente les étapes suivantes :
a) réalisation d'une analyse de point de fonctionnement du véhicule ferroviaire (100, 200) ;
b) alimentation du circuit intermédiaire à tension continue (114, 214) en énergie électrique provenant de la batterie de traction (120, 220) si une augmentation du rendement du véhicule ferroviaire est ainsi attendue conformément à l'analyse de point de fonctionnement ; et
c) alimentation de la batterie de traction (120, 220) en énergie électrique provenant du circuit intermédiaire à tension continue (114, 214) si une augmentation du rendement du véhicule ferroviaire est ainsi attendue conformément à l'analyse de point de fonctionnement ;
dans lequel l'analyse de point de fonctionnement comprend la détermination d'un rendement à un point de fonctionnement lorsque l'énergie est fournie uniquement par l'énergie électrique externe, lorsque l'énergie est fournie uniquement par la batterie de traction, ainsi que lorsque l'énergie est fournie à la fois par l'énergie externe et par la batterie de traction.

11. Procédé selon la revendication 10, présentant en outre au moins l'une des étapes suivantes :
d) approvisionnement de la machine de traction (150, 250) par la batterie de traction (120, 220) par l'intermédiaire du convertisseur de courant de traction (140, 240) connecté au circuit intermédiaire à tension continue (114, 214), et approvisionnement des systèmes auxiliaires par la batterie de traction (120, 220) par l'intermédiaire du convertisseur de systèmes auxiliaires (130, 230) connecté au circuit intermédiaire à tension continue (114, 214) ;
e) approvisionnement des systèmes auxiliaires par la batterie de traction (120, 220) par l'intermédiaire du convertisseur de systèmes auxiliaires (130, 230) connecté au circuit intermédiaire à tension continue (114, 214), et blocage du convertisseur de courant de traction (140, 240) ;
f) charge de la batterie de traction (120, 220) dans le fonctionnement de freinage auxiliaire ;
g) magnétisation de la machine de traction (150, 250) par l'intermédiaire du convertisseur de courant de traction (140, 240) connecté au circuit intermédiaire à tension continue (114, 214), dans lequel le circuit intermédiaire à tension continue (114, 214) est approvisionné par la batterie de traction (120, 220) ; et
h) approvisionnement des systèmes auxiliaires par la batterie de traction (120, 220) par l'intermédiaire du convertisseur de systèmes auxiliaires (130, 230) connecté au circuit intermédiaire à tension continue (114, 214) ;

12. Procédé permettant l'entraînement efficace en énergie d'une machine de traction (150, 250) d'un véhicule ferroviaire (100, 200), dans lequel le véhicule ferroviaire présente un convertisseur de réseau (110, 210), un convertisseur de courant de traction (140, 240) relié au convertisseur de réseau (110, 210) par l'intermédiaire d'un circuit intermédiaire à tension continue (114, 214) pour l'approvisionnement de la machine de traction (150, 250) du véhicule ferroviaire (100, 200), un convertisseur de systèmes auxiliaires (130, 230) connecté au circuit intermédiaire à tension continue (114, 214) pour l'approvisionnement de systèmes auxiliaires, et une batterie de traction (120, 220) connectée au circuit intermédiaire à tension continue (114, 214), dans lequel le procédé présente au moins les étapes suivantes :
a) réalisation d'une analyse de point de fonctionnement du véhicule ferroviaire (100, 200) pour déterminer si un fonctionnement normal ou un mode de fonctionnement hybride est mis en oeuvre ; dans lequel, dans un fonctionnement normal, le véhicule ferroviaire est alimenté en énergie électrique par l'intermédiaire d'un réseau électrique ; et la batterie de traction (120, 220) est chargée avec de l'énergie électrique provenant du circuit intermédiaire à tension continue (114, 214) ; et dans lequel on entend par mode de fonctionnement hybride qu'en dehors du lieu de coupure lors duquel le convertisseur de réseau est alimenté en énergie électrique externe, le circuit intermédiaire à tension continue est alimenté uniquement en énergie électrique provenant de la batterie de traction, ou le circuit intermédiaire à tension continue est alimenté à la fois en énergie électrique externe et en énergie électrique provenant de la batterie de traction ;
b) alimentation du circuit intermédiaire à tension continue (114, 214) en énergie électrique provenant de la batterie de traction (120, 220) si une augmentation du rendement du véhicule ferroviaire est ainsi attendue conformément à l'analyse de point de fonctionnement, et en particulier blocage du convertisseur de courant de traction (140, 240) ;
c) alimentation du circuit intermédiaire à tension continue (114, 214) en énergie électrique externe si une augmentation du rendement du véhicule ferroviaire est ainsi attendue conformément à l'analyse de point de fonctionnement ;
d) alimentation du circuit intermédiaire à tension continue (114, 214) en énergie électrique provenant de la batterie de traction (120, 220) ainsi qu'en énergie électrique externe si une augmentation du rendement du véhicule ferroviaire est ainsi attendue conformément à l'analyse de point de fonctionnement, en particulier dans lequel l'énergie électrique provenant de la batterie de traction (120, 220) et l'énergie électrique externe sont pondérées différemment ;
dans lequel l'analyse de point de fonctionnement comprend la détermination d'un rendement à un point de fonctionnement lorsque l'énergie est fournie uniquement par l'énergie électrique externe, lorsque l'énergie est fournie uniquement par la batterie de traction, ainsi que lorsque l'énergie est fournie à la fois par l'énergie externe et par la batterie de traction.

13. Procédé selon la revendication 12, dans lequel le véhicule ferroviaire (100, 200) présente un transformateur (203) relié au convertisseur de réseau (110, 210), et/ou un collecteur de courant (207) pouvant être relié au transformateur (203), en particulier un pantographe.
